# EUROPÄISCHE PATENTANMELDUNG

(11) **EP 1 209 099 A1**
(43) Veröffentlichungstag der Anmeldung: **29.05.2002**
(21) Anmeldenummer: 01125098.2
(22) Anmeldetag: 23.10.2001
(51) Int. Cl.: B65F 1/00

(54) **Behälter zur platzsparenden Aufbewahrung von Altglas**

(30) Priorität: 21.11.2000 DE 20019752 U
(71) Anmelder: Cofresco Frischhalteprodukte GmbH & Co. KG, 32427 Minden (DE)
(72) Erfinder: Iturbe, Jesus, 28033 Madrid (ES)
(74) Vertreter: Dantz, Jan Henning

(57) **Zusammenfassung**

Behälter zur platzsparenden Aufbewahrung von Altglas.

Gegenstand der Erfindung ist ein Behälter (10) zur platzsparenden Aufbewahrung von Altglas.

Der Behälter (10) ist insgesamt schlauchförmig ausgebildet und zumindest an einem seiner stirnseitigen Enden (12) verschlossen. Der Behälter (10) ist aus einem schlagfesten, aber elastischen Material hergestellt.

Über das offene Ende (13) des Behälters (10) können beispielsweise Einwegflaschen (11) oder dergleichen in den Behälter (10) eingefüllt und innerhalb des Behälters (10) durch ein Schlagwerkzeug, beispielsweise einen Hammer (14) ohne Verletzungs- oder Beschädigungsgefahr für den Anwender zertrümmert werden. Es entsteht auch keine Verschmutzungsgefahr im Bereich der unmittelbaren Umgebung, da die beim Zertrümmern des Altglases entstehenden Glassplitter im Behälter (10) verbleiben.

Vorzugsweise ist der Behälter (10) aus einem transparenten Material hergestellt, so daß der Prozeß der Zertrümmerung von Altglas im Inneren des Behälters (10) vom Anwender beobachtet werden kann.

## Beschreibung

Die vorliegende Erfindung betrifft einen Behälter zur platzsparenden Aufbewahrung von Altglas, wie z.B. Getränkeflaschen, Gläsern oder dergleichen.

Es ist allgemein üblich, Altglas in Form von Einwegflaschen, Einweggläsern oder dergleichen in Körben, Kisten oder ähnlichen Behältern in Kellerräumen, Abstellkammern oder dergleichen aufzubewahren und zu gegebener Zeit das gesammelte Altglas in einen Recycling- Container zu bringen.

Da Altglas in der Regel bis zur Unterbringung in einen Recycling- Container als Ganzes in Körben, Kisten oder dergleichen gesammelt werden, fällt innerhalb relativ kurzer Zeit ein großes Sammelvolumen an.

Der vorliegenden Erfindung liegt die Aufgabe zu Grunde, einen Behälter der gattungsgemäßen Art zu schaffen, der ein besonders platzsparendes Aufbewahren von Altglas ermöglicht.

Die Aufgabe wird erfindungsgemäß dadurch gelöst, daß der Behälter schlauchförmig ausgebildet ist und aus einem schlagfesten, elastischen Material besteht und daß ein stirnseitiges Ende des Behälters verschlossen ist.

In einen derartigen Behälter kann Altglas in Form von Flaschen, Gläsern oder dergleichen eingefüllt werden, das Altglas kann dann im Behälter zerschlagen werden, so daß das Stauvolumen der aufzubewahrenden Altgläser drastisch reduziert wird.

Ist der Behälter weitestgehend mit entsprechend kleinen Glasscherben der zerstörten Altgläser gefüllt, kann der Behälter zu einem Recycling- Container gebracht und dort bequem entleert werden.

Vorteilhafter Weise ist der schlauchförmige Behälter aus einem transparenten Material hergestellt.

Hierdurch besteht die Möglichkeit, den Zerkleinerungsprozeß beim Zerschlagen der Altgläser zu beobachten. Das Zerschlagen kann z B. durch Hammerschlag oder dergleichen erfolgen.

Die zerkleinerten Glaspartikel sammeln sich am Boden des Behälters, also im Bereich seines verschlossenen Endes.

Es ist empfehlenswert, das Altglas zu relativ kleinen Partikeln zu zerstören, da auf diese Art und Weise das tatsächliche Stauvolumen zusätzlich reduziert werden kann.

Da das Zerstören des Altglases im schlauchförmigen Behälter erfolgen kann, ist hiermit weder eine Verletzungsgefahr für den Anwender noch eine Verschmutzungsgefahr für den Umgebungsbereich, in dem die Zerstörung vorgenommen wird, verbunden.

Besonders vorteilhaft ist es, wenn der schlauchförmige Behälter aus einem für den Recycling- Prozeß von Altglas neutralem Material besteht.

Es kann dann sogar der gefüllte Behälter insgesamt in einen Recycling- Container gegeben werden, so daß eine Reinigung des Behälters entfällt.

Bei wiederverwendbaren Behältern gemäß vorliegender Erfindung kann gegebenenfalls eine derartige Reinigung notwendig werden, da sich sowohl in Flaschen wie auch gegebenenfalls in Gläsern noch Reste von Flüssigkeiten oder Lebensmitteln wie Marmelade, Wurst oder dergleichen, befinden können.

Weitere Merkmale der Erfindung sind Gegenstand weiterer Unteransprüche.

Ausführungsbeispiele der Erfindung sind in der beigefügten Zeichnung dargestellt und werden im folgenden näher beschrieben.

Es zeigen:
- Figur 1.: Eine perspektivische Darstellung eines erfindungsgemäßen Behälters zum platzsparenden Aufbewahren von Altglas und einem Werkzeug zum Zertrümmern des im Behälter befindlichen Altglases
- Figur 2.: einen Schnitt durch den verschlossenen unteren Endbereich des Behälters nach Figur 1
- Figur 3.: einen der Figur 2 entsprechenden Schnitt durch einen Behälter nach einem weiteren Ausführungsbeispiel der Erfindung

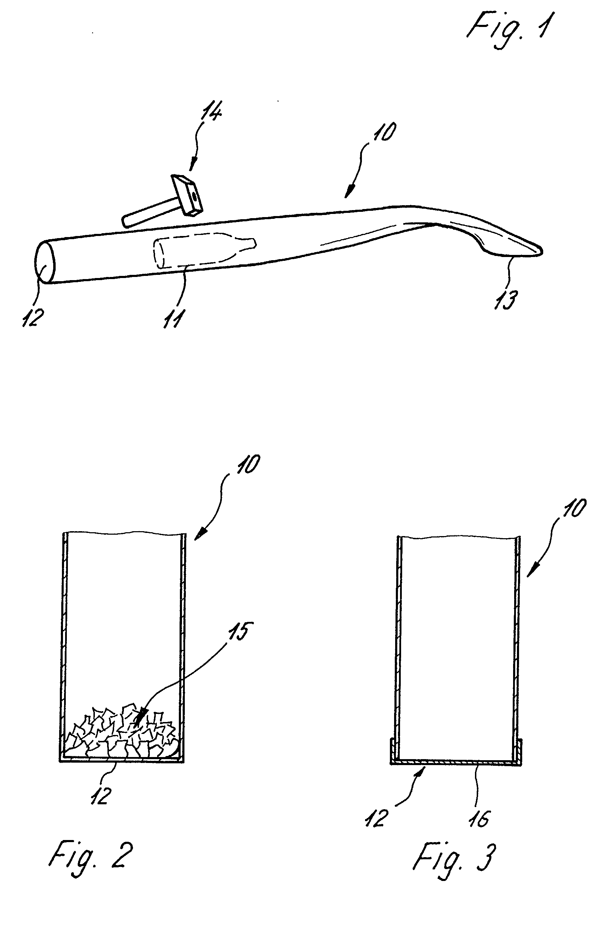

In den Figuren 1 bis 3 ist mit dem Bezugszeichen 10 jeweils ein Behälter zur platzsparenden Aufbewahrung von Altglas bezeichnet.

Unter Altglas sind im vorliegenden Zusammenhang beispielsweise Einwegflaschen 11, Einweggläser oder dergleichen zu verstehen.

Der Behälter 10 ist insgesamt schlauchförmig ausgebildet und zumindest an einem seiner stirnseitigen Enden 12 verschlossen. Der Behälter 10 ist aus einem schlagfesten, elastischen Material hergestellt.

Über das offene Ende 13 des Behälters 10 können beispielsweise Einwegflaschen 11 oder dergleichen in den Behälter 10 eingefüllt und innerhalb des Behälters 10 durch ein Schlagwerkzeug, beispielsweise einen Hammer 14, ohne Verletzungs- und Beschädigungsgefahr für den Anwender zertrümmert werden. Es entsteht auch keine Verschmutzungsgefahr im Bereich der unmittelbaren Umgebung, da die beim Zertrümmern des Altglases entstehenden Glassplitter 15 (siehe Figur 2) im Behälter 10 verbleiben.

Vorzugsweise ist der Behälter aus einem transparenten Material hergestellt, so daß der Prozeß der Zertrümmerung von Altglas im Inneren des Behälters 10 vom Anwender beobachtet werden kann. Der Anwender kann also erkennen, ob die bei der Zertrümmerung entstehenden Glassplitter 15 klein genug sind, um das angestrebte Ziel, nämlich das Stauvolumen für das Altglas so gering wie möglich zuhalten, erreicht wird.

Das verschlossene stirnseitige Ende 12 des Behälters 10 kann dauernd verschlossen sein, so wie in den Figuren 1 und 2 dargestellt. Es besteht aber auch die Möglichkeit, das verschlossene Ende 12 mit einem abnehmbaren Deckel 16 auszustatten, der bei der Entleerung bzw. Reinigen des Behälters 10 abgenommen werden kann. Der Deckel 16 kann als Schnappdeckel oder als Schraubdeckel, vorteilhafterweise anhängend am Behälter 10, ausgebildet sein.

Grundsätzlich besteht auch die Möglichkeit, den Behälter 10 insgesamt aus einem Material herzustellen, welches für den Recycling- Prozeß von Altglas als neutral bezeichnet werden kann. In diesem Falle kann dann der mit zertrümmerten Altglas gefüllte Behälter insgesamt in einen Recycling- Container überführt werden.
Dazu kann beispielsweise der schlauchförmige Behälter 10 aus einem bei dem beim Recycling- Prozeß von Altglas erreichten Temperaturen verbrennenden Material hergestellt sein.

Der schlauchförmige Behälter 10 kann alternativ hierzu aber auch aus einem Material hergestellt sein, welches wie das Altglas selbst beim Recycling- Prozeß schmilzt und auf Grund seiner Eigenschaften auch gefahrlos in der Schmelze verbleiben kann.

Der schlauchförmige Behälter 10 kann in einem entsprechenden Raum platzsparend aufgestellt oder auch abnehmbar an einer Wand befestigt sein.

## Patentansprüche

1. Behälter zur platzsparenden Aufbewahrung von Altglas, wie z.B. Flachen, Gläsern oder dergleichen, **dadurch gekennzeichnet, daß** der Behälter (10) schlauchförmig ausgebildet ist und aus einem schlagfesten, elastischen Material besteht und das ein Stirnseitiges Ende (12) des Behälters (0) verschlossen ist.

2. Behälter nach Anspruch 1, **dadurch gekennzeichnet, daß** der schlauchförmige Behälter (10) aus einem transparenten Material hergestellt ist.

3. Behälter nach Anspruch 1oder 2, **dadurch gekennzeichnet, daß** der schlauchförmige Behälter (10) aus einem für den Recycling- Prozeß von Altglas neutralen Material besteht.

4. Behälter nach Anspruch 3, **dadurch gekennzeichnet, daß** der schlauchförmige Behälter aus einem bei den beim Recycling- Prozeß von Altglas erreichten Temperaturen verbrennenden Material besteht.

5. Behälter nach einem oder mehreren der vorhergehenden Ansprüche, **dadurch gekennzeichnet, daß** das geschlossene Ende (12) des Behälters (10) dauerhaft verschlossen ist.

6. Behälter nach einem oder mehreren der Ansprüche 1 bis 4, **dadurch gekennzeichnet, daß** verschlossene Ende (12) des Behälters (10) mittels eines abnehmbaren Deckels (16) verschlossen ist.

7. Behälter nach Anspruch 6, **dadurch gekennzeichnet, daß** der Deckel (16) als Schnappdeckel ausgebildet ist.

8. Behälter nach Anspruch 6, **dadurch gekennzeichnet, daß** der Deckel (16) als Schraubdeckel ausgebildet ist.

9. Behälter nach einem der Ansprüche 6-8, **dadurch gekennzeichnet, daß** der Deckel (16) anhängend am Behälter (10) befestigt ist.
